# EUROPEAN PATENT SPECIFICATION

(11) **EP 3 340 414 B1**
(45) Date of publication and mention of the grant of the patent: **22.12.2021**
(21) Application number: 16855655.3
(22) Date of filing: 04.10.2016
(51) Int. Cl.: H02J 3/01, H02J 3/12, H02J 3/14

(54) **ACTIVE FILTER, CONTROL METHOD THEREOF, POWER MANAGEMENT SYSTEM COMPRISING ACTIVE FILTER**
AKTIVER FILTER, STEUERUNGSVERFAHREN DAFÜR, LEISTUNGSVERWALTUNGSSYSTEM MIT AKTIVEM FILTER
FILTRE ACTIF, SON PROCÉDÉ DE COMMANDE, SYSTÈME DE GESTION DE PUISSANCE COMPRENANT LE FILTRE ACTIF

(30) Priority: 14.10.2015 KR 20150143564
(43) Date of publication of application: 27.06.2018
(73) Proprietor: Samsung Electronics Co., Ltd., Suwon-si, Gyeonggi-do 16677 (KR)
(72) Inventor: SEO, Han Sol, Seoul 06637 (KR); SHIN, Jong Hyun, Seoul 07718 (KR); CHO, Je Hyung, Suwon-si Gyeonggi-do 16546 (KR)
(74) Representative: Walaski, Jan Filip
(86) International application number: PCT/KR2016/011066
(87) International publication number: WO 2017/065438

(56) References cited:
- EP-A1- 1 670 115
- EP-A1- 2 919 363
- EP-A2- 2 337 178
- EP-A2- 2 383 857
- WO-A1-2014/147294
- JP-A- 2010 279 170
- JP-A- 2014 121 145
- JP-A- 2015 162 998
- JP-A- 2015 163 011
- US-A1- 2008 219 035

## Description

The present invention relates to an active filter having a function of removing harmonics by which power is managed and power data is transmitted and received, and a power management system including the active filter.

An active filter is an apparatus for inputting harmonic components and reverse phase harmonic components generated by a load to a circuit to offset unnecessary components using a high-frequency inverter capable of generating an arbitrary waveform, and for compensating for a power flow of reactive power, and the active filter is also referred to as an active power filter.

Generally, as the use of electronic devices such as a switching power supply, a computer, an air handling unit, and the like increases, a load of electric power used in a home or the industrial field is gradually nonlinearly changed.

In this case, because an alternating current (AC) signal of a voltage/current type having a frequency of 50 Hz or 60 Hz is distorted due to a nonlinear load when a power load is nonlinearly changed, harmonic components corresponding to integral multiples of fundamental frequency components are generated in addition to fundamental frequency components of 50 Hz or 50 Hz. Due to the harmonic components, an instantaneous maximum value of the AC signal may be larger than a pure AC signal consisting only of its fundamental frequencies before nonlinear distortion occurs, and thus a power device may fail due to an excess of current or voltage rating and excessive power loss may occur. In order to solve the above problems, an active filter may be used to remove the harmonics and supply stable power to the load.

In addition, due to the development of information and communication technology, the number of electric devices using electricity has drastically increased, and consumption of electric power has accordingly increased year by year. Accordingly, a power company side remotely measures the amount of power consumed by a power consumer side by performing wired/wireless communication with the power consumer side, prevents an overload of electric power equipment, and provides stable power to the power consumer side by controlling production and supply of electricity on the basis of the result of the remote measurement. In this case, various studies have been conducted to manage power consumption by measuring and monitoring an amount of power consumed by a load side consuming power.

EP 2383857 discloses a system for managing power comprising a power meter, a processor and an active filter. Further relevant prior art is disclosed in: EP 2 337 178 A2, WO2014/147294 A1, EP 2 919 363 A1 and EP 1 670 115 A1.

The present invention is directed to providing an active filter capable of monitoring power consumed by a load to manage power, and transmitting and receiving data on the power consumed by the load via wired/wireless communication, and a power management system including the same.

According to an aspect of the invention, there is provided an active filter as set out in claim 1.

An active filter according to an exemplary example of the present invention to achieve the above-described object provides

an active filter for reducing harmonics of a power current of a load which includes an electronic device, the active filter including a measurement unit configured to measure an electrical signal of the load, a control unit configured to acquire data on power consumed by the load based on the measured electrical signal of the load and adjust the power consumed by the load on the basis of a result of a comparison between the acquired data and data on preset power consumption of the load, and a communication unit configured to transmit at least one of the acquired data and the data on the adjusted power consumed by the load.

Further, the control unit may compare the data on the power consumption of the load based on the electrical signal measured by the measurement unit with the data on the preset power consumption of the load, and reduce the power consumption of the load when the power consumption of the load exceeds the data on preset power consumption data.

Additionally, the active filter may include a storage unit configured to store the data on the preset power consumption.

Additionally, the control unit may compare the power consumption of the load and the power consumption data stored in the storage unit and reduce the power consumption of the load when the power consumption of the load exceeds the stored power consumption data.

Additionally, the electrical signal may include at least one of a power signal, a voltage signal, and a current signal based on an operation of the load.

Additionally, the communication unit may transmit at least one of the data on the acquired data on the power consumption of the load and the data on adjusted power consumption of the load to an active filter connected to another load, and may receive at least one of data on power consumption of the another load and data on adjusted power consumption of the another load from the active filter connected to the another load.

Additionally, the communication unit may transmit and receive the data by a wireless communication method, and the wireless communication method may include a radio frequency (RF) method, a wireless fidelity (Wi-Fi) method, Bluetooth, ZigBee, a near field communication (NFC) method, and an ultra wide band (UWB) communication method.

Additionally, the control unit may compare data on power consumption of at least one another load received by the communication unit with data on preset power consumption of the at least one another load and transmit a control signal to reduce the power consumption of the at least one another load when the power consumption of the at least one another load exceeds the data on the preset power consumed by the at least one another load.

Additionally, the storage unit may store the data on the preset power consumed by the at least one another load.

Additionally, the control unit may compare the data on the power consumption of the at least one another load received by the communication unit with data on power consumption of the at least one another load previously stored in the storage unit.

Additionally, the electric device may include a system air conditioner, a refrigerator, and a washing machine.

Additionally, an active filter according to an exemplary embodiment of the present invention to achieve the above-described object provides

an active filter that includes a measurement unit configured to measure the electrical signal of the load, a control unit configured to acquire the data on the power consumption of the load based on the measured electrical signal of the load, and adjust the power consumption of the load on the basis of the result of the comparison between the acquired data and the data on the preset power consumed by the load, and a wireless communication unit configured to transmit and receive at least one of the acquired data and the data on the adjusted power consumption of the load via wireless communication method.

Additionally, a method of controlling an active filter according to an exemplary embodiment of the present invention to achieve the above-described object provides

a method of controlling an active filter for reducing harmonics of power current of a load, the method including measuring an electrical signal of a load; acquiring data on power consumed by the load based on the measured electrical signal of the load, adjusting the power consumed by the load on the basis of a result of a comparison between the data and data on preset power consumption of the load, and transmitting and receiving at least one of the acquired data and the data on the adjusted power consumption.

Additionally, the adjusting of the power consumed by the load may include comparing the data on the power consumed by the load based on the measured electrical signal and the data on the preset power consumption of the load and reducing the power consumption of the load when the power consumption of the load exceeds the data on the preset power consumption.

Additionally, the method may include storing the data on the preset power consumption of the load.

Additionally, the adjusting of the power consumed by the load may include comparing the power consumption of the load and the stored data on the power consumption and reducing the power consumption of the load when the power consumption of the load exceeds the stored data on the power consumption.

Additionally, the transmitting and receiving of the at least one of the acquired data and the data on the adjusted power consumption may include transmitting at least one of the acquired data on the power consumption of the load and the data on the adjusted power consumption of the load to an active filter connected another load and receiving at least one of data on power consumption of the another load and data on adjusted power consumption of the another load. Also, a power management system including an active filter according to an exemplary embodiment of the present invention to achieve the above-described object includes

at least one sub-active filter configured to acquire data on power consumed by at least one load and to transmit the data, and a main active filter configured to adjust the power consumed by the at least one load based on the data received the at least one sub-active filter.

Additionally, the main active filter may include a storage unit configured to store data on preset power consumption of the at least one load.

Additionally, the main active filter may compare the power consumption of the at least one load and the data on the power consumption stored in the storage unit and reduce the power consumed by the load electrically connected to the at least one sub-active filter when the power consumed by the at least one load exceeds the stored data on the power consumption.

Additionally, the main active filter may compare the power consumption of the at least one load with the data on the power consumption stored in the storage unit and transmit a control signal for reducing the power consumption of the at least one load to the at least one sub-active filter when the power consumed by the at least one load exceeds the stored data on the power consumption.

Additionally, the at least one sub-active filter may reduce the power consumed by the load electrically connected to the at least one sub-active filter on the basis of the control signal received from the main active filter.

Additionally, the at least one sub-active filter may adjust the power consumed by the load on the basis of the acquired data.

Additionally, the at least one sub-active filter may transmit data on the adjusted power consumption to the main active filter.

Additionally, the at least one sub-active filter may transmit at least one of the acquired data on the power consumption of the load and the data on the adjusted power consumption of the load to at least one another sub-active filter.

### [Advantageous Effects]

According to an exemplary embodiment of the present invention, since an active filter used to reduce harmonics can control and adjust power consumed by a load using information about a measured electrical signal of the load, the active filter can perform a function of controlling power consumption of the load without installation of additional equipment being necessary.

Additionally, multiple active filters each connected to a load may be connected through a wired/wireless communication network and integrally control power consumption of loads used in buildings and the like by transmitting and receiving data related to the power consumption of the loads and power management.

### [Description of Drawings]

FIG. 1A illustrates a configuration diagram in which an active filter and an outdoor unit of an air handling unit are connected in series according to an exemplary embodiment of the present invention.
FIG. 1B illustrates a configuration diagram in which an active filter and an outdoor unit of an air handling unit are connected in parallel according to an exemplary embodiment of the present invention.
FIG. 2A illustrates a configuration diagram of a multi-type air handling unit in which active filters and outdoor units of air handling units are connected in series according to an exemplary embodiment of the present invention.
FIG. 2B illustrates a configuration diagram of a multi-type air handling unit in which active filters and outdoor units of air handling units are connected in parallel according to an exemplary embodiment of the present invention.
FIG. 3 illustrates a block diagram of a control flow of an active filter according to an exemplary embodiment of the present invention.
FIG. 4 illustrates a block diagram of a control flow for transmitting and receiving data between active filters according to an exemplary embodiment of the present invention.
FIG. 5 illustrates a conceptual diagram of a communication function for transmitting and receiving data between active filters according to an exemplary embodiment of the present invention.
FIGS. 6 and 7 illustrate a conceptual diagram of a communication function for transmitting and receiving data between a sub-active filter and a main active filter according to an exemplary embodiment of the present invention.
FIG. 8 illustrates a control flowchart of a power management system in which a main active filter performs power management according to power consumption data according to an exemplary embodiment of the present invention.
FIG. 9 illustrates a control flowchart of a power management system in which a sub-active filter performs power management according to power consumption data according to an exemplary embodiment of the present invention.
FIG. 10 illustrates a control flowchart of a power management system in which power consumption is adjusted in a sub-active filter and a main active filter manages power consumption of an entire load in accordance with power consumption data according to an exemplary embodiment of the present invention.
FIG. 11 illustrates a control flowchart of a power management system in which a main active filter performs power management in accordance with power rate data according to an exemplary embodiment of the present invention.
FIG. 12 illustrates a control flowchart of a power management system in which a sub-active filter performs power management in accordance with power rate data according to an exemplary embodiment of the present invention.
FIG. 13 illustrates a control flowchart of a power management system in which a sub-active filter adjusts power consumption and a main active filter manages power consumption of an entire load in accordance with power rate data based on power consumption according to an exemplary embodiment of the present invention.

### [Modes of the Invention]

Advantages and features of the present invention and methods for accomplishing the same will become apparent with reference to the accompanying drawings and the exemplary embodiments described in detail below.

It should be understood that the exemplary embodiments described herein and the arrangements shown in the drawings are merely preferred examples of the present invention, and various modifications that may replace the exemplary embodiments and drawings of the present invention may exist at a time at which the present application is filed.

Also, the terms used herein are used to illustrate the exemplary embodiments and are not intended to limit and/or to restrain the present invention. The singular forms include plural referents unless the context clearly dictates otherwise. In this specification, the terms "comprise," "have," and the like are used to specify that there is a stated feature, number, step, operation, element, part or combination thereof, but do not preclude the presence or addition of one or more of other features, numbers, steps, operations, elements, components, or combination thereof.

Terms including ordinals such as "first," "second," and the like used herein may be used to describe various components, but the components are not limited by the terms, and the terms are used solely for the purpose of distinguishing one component from the other component. For example, without departing from the scope of the present invention, a first component may be referred to as a second component, and similarly, a second component may also be referred to as a first component. The term "and/or" includes any combination of a plurality of related listed items or any item of the plurality of related listed items.

Hereinafter, an active filter and a method of controlling the same will be described in detail according to exemplary embodiments described below with reference to the accompanying drawings. In the drawings, the same reference numerals will denote the same elements, and duplicate descriptions thereof will be omitted.

The active filter and the method of controlling the same described below will be described assuming, as an example, the case in which a load connected to the active filter is a large load such as an air handling unit. In particular, an example of a ducted air handling unit of a central control type used in a building or the like is taken. However, since the active filter may be connected to various loads other than the air handling unit, the active filter is not limited to the exemplary embodiments described herein. That is, the load described in the present invention corresponds to an electronic device, and the electronic device may correspond to a load of a refrigerator, a washing machine, and the like in addition to a system air conditioner.

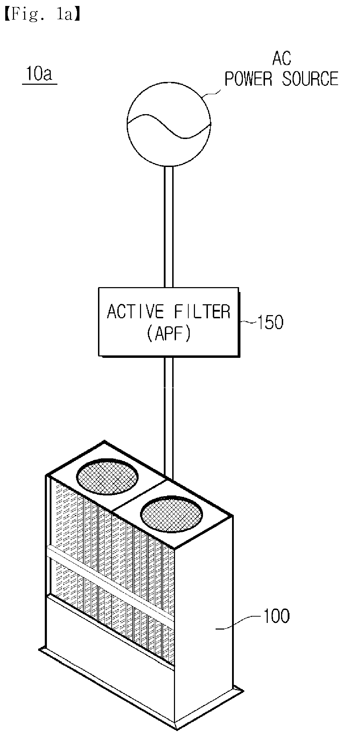

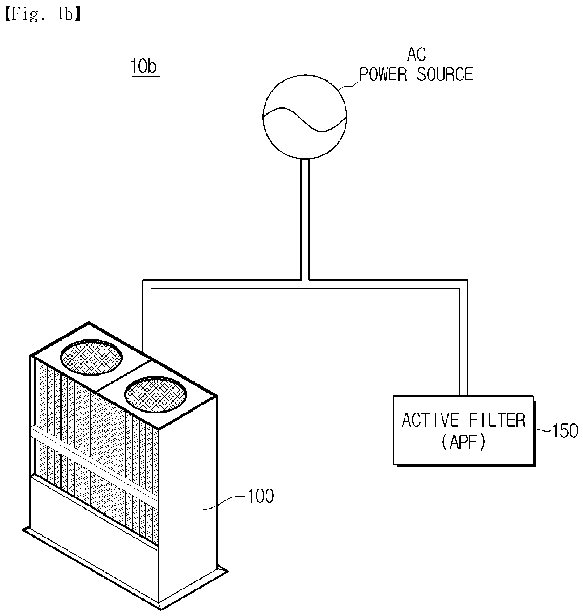

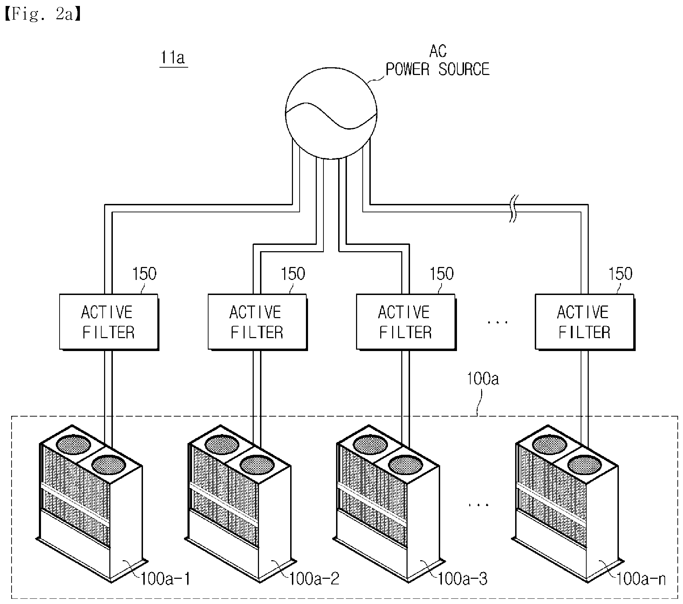

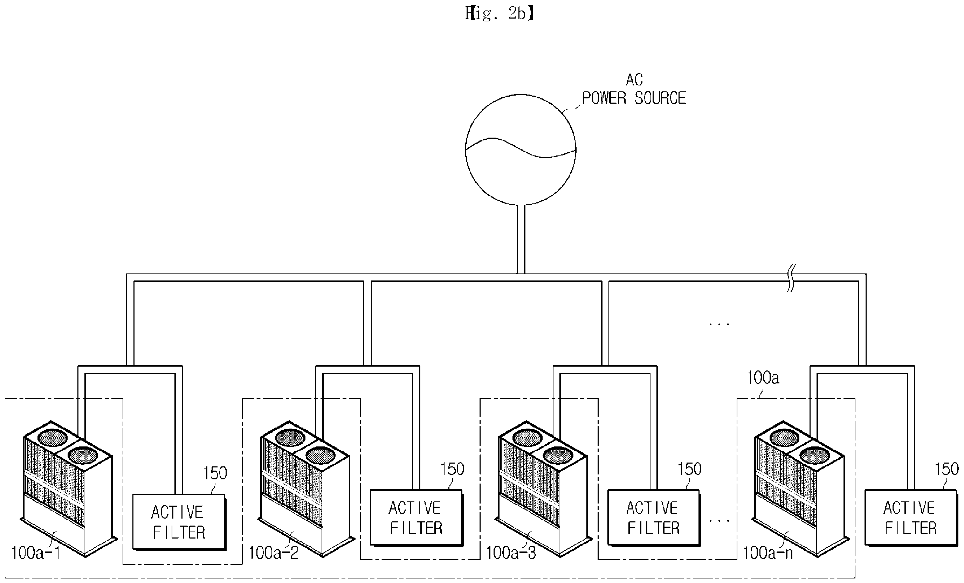

FIG. 1A illustrates a configuration diagram in which an active filter and an outdoor unit of an air handling unit are connected in series according to an exemplary embodiment of the present invention, and FIG. 1B illustrates a configuration diagram in which an active filter and an outdoor unit of the air handling unit are connected in parallel according to an exemplary embodiment of the present invention. FIG. 2A illustrates a configuration diagram of a multi-type air handling unit in which active filters and outdoor units of air handling units are connected in series according to an exemplary embodiment of the present invention, and FIG. 2B illustrates a configuration diagram of a multi-type air handling unit in which active filters and outdoor units of air handling units are connected in parallel according to an exemplary embodiment of the present invention.

Referring to FIGS. 1A and 1B, air handling units 10a and 10b according to the exemplary embodiments may each include an alternating current (AC) power source for supplying power to the air handling unit, an outdoor unit 100 provided in an outdoor space and configured to perform heat exchange between outdoor air and a refrigerant, and an indoor unit (not shown) provided in an indoor space and configured to perform heat exchange between indoor air and the refrigerant.

The outdoor unit 100 includes a compressor for compressing a gaseous refrigerant, an outdoor heat exchanger for performing heat exchange between outdoor air and the refrigerant, a four-way valve for selectively guiding the refrigerant discharged from the compressor to any one of the outdoor heat exchanger and the indoor unit, an outdoor expansion valve for reducing a pressure of the refrigerant guided to the heat exchanger, and an accumulator for preventing a liquid refrigerant from being introduced into the compressor.

The indoor unit may include an indoor heat exchanger for performing heat exchange between room air and the refrigerant, and an indoor expansion valve for reducing the pressure of the refrigerant provided to the indoor heat exchanger while cooling.

When the air handling units 10a and 10b are in a cooling mode, the refrigerant may be compressed to have a high pressure by the compressor of the outdoor unit 100, and the compressed refrigerant may be guided to the outdoor heat exchanger by the four-way valve. The compressed refrigerant is condensed in the outdoor heat exchanger, and the refrigerant releases latent heat to outdoor air while being condensed. The condensed refrigerant may be guided to the indoor unit.

The refrigerant guided to the indoor unit is decompressed in the indoor expansion valve provided in the indoor unit and then evaporated in the indoor heat exchanger. While evaporating, the refrigerant absorbs latent heat from the room air. In this way, the air handling unit 10a may cool the indoor air using the heat exchange between the indoor air and the refrigerant generated in the indoor heat exchanger in the cooling mode.

The evaporated refrigerant is guided to the outdoor unit 100, separated into a liquid refrigerant that is not yet evaporated and an evaporated gaseous refrigerant in the accumulator of the outdoor unit 100, and the gaseous refrigerant is then supplied to the compressor. The refrigerant guided to the compressor is compressed and resupplied to the four-way valve, and thus the above-described refrigerant circulation may be repeatedly performed.

In summary, in the cooling mode, the air handling units 10a and 10b absorb thermal energy of indoor air in the indoor unit and radiate the thermal energy to the outside in the outdoor unit 100, thereby releasing indoor thermal energy outdoors.

In a heating mode of the air handling units 10a and 10b, the refrigerant is compressed to have a high pressure by the compressor of the outdoor unit 100, and the compressed refrigerant may be guided to the indoor unit.

The refrigerant is condensed in the indoor heat exchanger provided in the indoor unit. While being condensed, the refrigerant releases latent heat into the room air. In this way, in the heating mode, the air handling units 10a and 10b may heat the indoor air using the heat exchange between the refrigerant generated in the indoor heat exchanger and the indoor air. The condensed refrigerant may be introduced to the outdoor unit 100 after being decompressed in the indoor expansion valve.

The refrigerant guided to the outdoor unit 100 is decompressed by the outdoor expansion valve provided in the outdoor unit 100 and is then evaporated in the outdoor heat exchanger. The evaporated refrigerant is separated into a liquid refrigerant that is not yet evaporated in the accumulator of the outdoor unit 100 and an evaporated gaseous refrigerant, and the gaseous refrigerant is then supplied to the compressor. The refrigerant guided to the compressor is compressed and resupplied to the four-way valve, and thus the above-described refrigerant circulation may be repeatedly performed.

In summary, in the heating mode, the air handling units 10a and 10b may absorb thermal energy of the outdoor air in the outdoor unit 100 and deliver outdoor thermal energy to a room by emitting the thermal energy from the indoor unit to the room.

Referring to FIGS. 2A and 2B, multi-type air handling units 11a and 11b according to the exemplary embodiment of the present invention may each include an outdoor unit 100a provided in an outdoor space and configured to perform heat exchange between outdoor air and the refrigerant, a plurality of indoor units (not shown) for performing heat exchange between the indoor air and the refrigerant, and a distributor (not shown) for distributing the refrigerant supplied from the outdoor unit 100a to the indoor units and selectively performing cooling or heating.

Since the outdoor unit 100a is substantially the same as the outdoor unit 100 of FIGS. 1A and 1B and the circulation process of the refrigerant for cooling and heating the multi-type air handling units 10a and 10b is also the same as that of FIGS. 1A and 1B, detailed descriptions thereof will be omitted.

As shown in FIGS. 1A and 1B, the outdoor units 100 and 100a may each be connected to an active filter 150. The outdoor units 100 and 100a correspond to a load, and the active filter 150 is installed on a line connected to the outdoor units 100 and 100a to remove harmonic components generated in a voltage/current type AC signal due to a non-linear load when an indoor unit 200 is controlled.

The active filter 150 may be connected in series or in parallel to a single load or a plurality of loads, and may sense a current of the load to remove a harmonic current therefrom. That is, the active filter 150 and the outdoor unit 100 may be connected in series as shown in FIG. 1A, or the active filter 150 and the outdoor unit 100 may be connected in parallel as shown in FIG. 1B. Whether the active filter 150 is connected in series or in parallel may depend on the manner of the active filter 150.

In addition, as shown in FIGS. 2A and 2B, the multi-type air handling units 11a and 11b correspond to a large load for cooling or heating an entire building by a central control system such as a building. Therefore, when using such a large load, integrally managing power consumption of the entire load by monitoring power consumed by each load and controlling and managing the power consumed by each of the loads is necessary.

Referring to FIGS. 2A and 2B, in the multi-type air handling units 11a and 11b, each of the active filters 150 may be connected to the outdoor unit 100 in series or in parallel. FIGS. 2A and 2B are merely exemplary embodiments, and various embodiments may exist depending on the type and wiring scheme of the active filter 150.

A plurality of active filters 150 according to the exemplary embodiment of the present invention may each be connected to the outdoor units 100 and 100a of the air handling units 10a to 11b, as shown in FIGS. 1A to 2B, to acquire data on the power consumed by each load.

In addition, the active filters may adjust the power consumed by the load on the basis of the acquired data on the power consumption of the load, and transmit at least one of the data on the power consumption of the load and the data on the adjusted power consumption between the plurality of active filters by using wired/wireless communication.

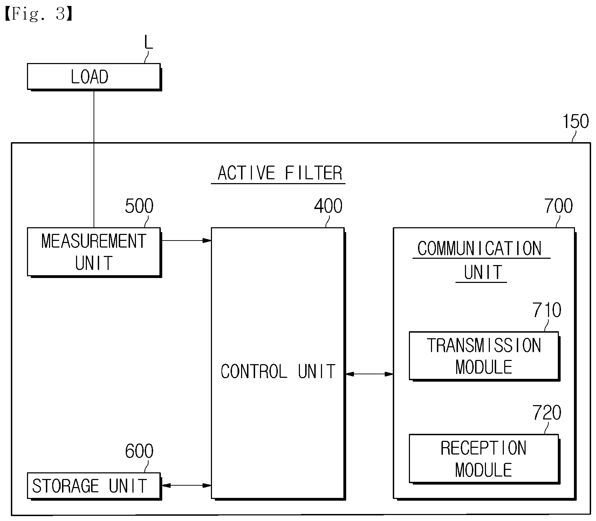

FIG. 3 illustrates a block diagram of a control flow of the active filter according to the exemplary embodiment of the present invention.

Referring to FIG. 3, the active filter 150 according to the exemplary embodiment of the present invention may include a control unit 400 for acquiring data on power consumed by a load L and adjusting the power consumed by the load on the basis of the acquired data, a measurement unit 500 for measuring an electrical signal of the load, a storage unit 600 for storing data related to control of the active filter 150, and a communication unit 700 for transmitting and receiving data required for the active filter 150 and a power management system.

The measurement unit 500 may measure an electrical signal of the load L to acquire the data on the power consumed by the load L. Since the load L corresponds to a large load such as the air handling units 10a to 11b and the like, the data for the power consumed by the load L is acquired to perform power management.

The measurement unit 500 may measure the electrical signal of a load L electrically connected thereto and transmit the measured electrical signal to the control unit 400. In this case, the electric signal may be at least one of a power signal, a voltage signal, and a current signal based on an operation of the load L.

The measurement unit 500 may include at least one of a voltage measurement unit for measuring a voltage of a single phase or three phases, a current measurement unit for measuring a current, and a power measurement unit for measuring power.

The measurement unit 500 may include a current measurement unit for measuring a current and a voltage measurement unit connected to two contact points (single phase) or three contact points (three phases) of power supply terminals and for measuring voltage at the two contact points or three contact points, and may calculate and output the electric power as a function of the voltage and current. In this case, the power consumed by the load L may also be calculated by the control unit 500.

Here, the current measurement unit may include a coil such as an ammeter connected between lead wires in which a current flows or a current transformer (CT) wound around a lead wire.

Further, the measurement unit 500 may include only a current measurement unit for measuring a current flowing in the load L. In this case, the measurement unit 120 may calculate power based on a constant voltage and the measured current, and output the calculated power. In this case, the power consumed by the load L may also be calculated by the control unit 500.

That is, since commercial power is applied to each load such that a voltage applied to each of the loads is almost constant, the constant voltage is acquired in advance and is stored in the measurement unit 500 so that the measurement unit 500 may use the stored constant voltage while outputting the power.

The control unit 400 may collectively control the control flow relating to the operation of the active filter 150. The active filter 150 may input a harmonic component into a circuit thereof to remove a harmonic component generated by the load L while the load L is operating. The control unit 400 may transmit a control signal for removing the harmonic component generated by the operation of the load L based on the electrical signal of the load L measured by the measurement unit 500. Since the technique for removing harmonics of the active filter 150 corresponds to a technique that is already widely used in many fields, a detailed description thereof will be omitted.

The control unit 400 may acquire the data on the power consumed by the load L and adjust the power consumed by the load L on the basis of the acquired data. Specifically, the measurement unit 500 may measure the electrical signal of the load L and transmit the measured electrical signal to the control unit 400, and the control unit 400 may acquire the data on the power consumed by the load on the basis of the electrical signal of the load L received from the measurement unit 500.

In addition, the control unit 400 may transmit the control signal to the load L through the communication unit 700 so that the power consumption of the load L may be adjusted on the basis of the electric signal of the load L measured by the measurement unit 500.

While the active filter 150 according to the related art has a configuration including the measurement unit 500 for measuring the electric signal of the load L to remove the harmonic current generated by the operation of the load L, the active filter 150 according to the exemplary embodiment of the present invention may be used to manage power of a plurality of loads L used in a large load or the like on the basis of the power consumed by the load L.

The control unit 400 may acquire the data on the power consumed by the load L to be electrically connected to the measurement unit 500 on the basis of at least one of electric signals which are measured by the measurement unit 500 and received from the measurement unit 500, that is, a power signal, a voltage signal, and a current signal. The electric signal measured by the measurement unit 500 includes unique information of the load L to be operated, that is, a waveform of the electric signal, a characteristic waveform included in the electric signal at a time of an initial operation, a noise component of a constant frequency band include in the electrical signal, a harmonic component for a reference frequency included in the electric signal, a high frequency signal included in the electric signal, an amount of electric power, and pattern information thereof.

The control unit 400 may calculate the power consumed by the load L on the basis of the current signal and the voltage signal of the load L and an operation time of the load L. Further, the control unit 400 may compare the calculated power consumption data with power consumption data of the load L previously stored in the storage unit 600. The power consumption data of the load L previously stored in the storage unit 600 refers to a reference value of the power consumption data previously stored by a user, and may correspond to data stored in an external server through a network. That is, a maximum power consumption tolerance value or an average power consumption tolerance value of the load connected to the active filter 150 may be stored as the reference value in the storage unit 600, and the control unit 400 may compare a current power consumption of the load L with the reference power consumption stored in the storage unit 600 and then perform control such that the power consumption of the load L is reduced when the current power consumption of the load L exceeds the stored reference power consumption.

In addition, the control unit 400 may control the communication unit 700 to transmit at least one of the data on the power consumption consumed by the load L and the data on the power consumption of the load L reduced by the control unit 400 to another active filter 150. When the communication unit 700 of the active filter 150 receives data concerning the power consumed by another load L from a communication unit 700 of another active filter 150, the control unit 400 may determine whether power consumed by another load L exceeds the reference power consumption stored in the storage unit 600, and may transmit a control signal to reduce the power consumed by another load L to another active filter 150 when the power does exceed the reference power consumption.

The control unit 400 may be implemented as an array of a plurality of logic gates, and may be implemented by a combination of a general-purpose microprocessor and a memory in which a program executable by the microprocessor is stored.

The storage unit 600 may store data related to the operation and control of the active filter 150 and may store data on the power consumption consumed by the load L. Specifically, when the load connected to the active filter 150 consumes power, a maximum power consumption tolerance value or an average power consumption tolerance value may be stored as a reference value, and the stored data may be provided to the control unit 400 to be used in a comparison with the power consumption data of the load L acquired by the control unit 400.

The power consumption data of the load L is a value required to manage and control the power consumption of the plurality of loads L in the power management system, and may be a criterion for determining whether the power consumed by the plurality of loads L is larger or smaller than the reference value in view of an amount of the individual load L or an amount of the entire load L.

The user may store the reference value of the power consumed by the load connected to the active filter 150 using an input unit outside the active filter 150. Further, the measurement unit 500 may store data in real time on the electrical signal of the load L measured by the measurement unit 500 when the load L is operated, and may compare the measured power consumption of the load L with the stored power consumption of the load L to store data on an adjusted power consumption of the load L.

Preset power consumption data of another load L connected to another active filter 150 may also be stored in the storage unit 600. As will be described below, one active filter 150 may receive data on power consumed by a load L connected to another active filter 150 from another active filter 150, and in this case, may compare the received data and the stored data on the power consumption of another load L to determine whether the current power consumption of another load L exceeds the reference value.

When the control unit 400 transmits a control signal for reducing the power consumption consumed by another load L to the stored reference consumption value, data on the reduced power consumption may also be stored in the storage unit 600.

The storage unit 600 may include, for example, a high-speed random-access memory (RAM), a magnetic disk, a static random-access memory (SRAM), a dynamic random-access memory (DRAM), a read-only memory (ROM), and the like, but is not limited thereto. In some cases, the storage unit 600 may include a nonvolatile memory such as a flash memory, an erasable programmable read-only memory (EPROM), an electrically erasable programmable read-only memory (EEPROM), and the like. Further, the storage unit 600 may be detachable from the active filter 150. For example, the storage unit 600 may include a compact flash (CF) card, a secure digital (SD) card, a smart media (SM) card, a multimedia card (MMC), or a memory stick, but is not limited thereto. Also, the storage unit 600 may be provided outside the active filter 150 to transmit or receive data to the active filter 150 via wired or wireless communication.

The communication unit 700 may include a transmission module 710 and a reception module 720, and may compare the data on the power consumption consumed by the load L and the stored reference value of the power consumption to transmit and receive at least one data on the adjusted power consumption.

Further, as described above, the communication unit 700 may transmit a control signal for adjusting the power consumption of the load L to the load L under the control of the control unit 400.

According to the exemplary embodiment of the present invention, the communication unit 700 may be installed in the active filter 150 to perform wireless communication with another active filter 150 and transmit and receive data related to the control and operation of the active filter 150. That is, the communication unit 700 may transmit at least one of the data on the power consumption of the load L acquired by the control unit 400 and the data on the adjusted power consumption to the active filter 150 installed in another load L, and may receive at least one of the data on the power consumption of another load L and the data on the adjusted power consumption of another load L from the active filter 150 connected to another load L. By transmitting and receiving data through the communication unit 700 via wireless communication as described above, it is possible to transmit and receive data using a network in a building and the like and manage the power consumption of the load L without installation of additional wirings being necessary.

As will be described below, when the active filter 150 is divided into a sub-active filter 151 and a main active filter 152, one or more sub-active filters 151 may transmit and receive the power consumption data of the load L and the data on the adjusted power consumption between the one or more sub-active filters 151 using the communication unit 700 provided therein. Additionally, the one or more sub-active filters 151 may transmit the acquired power consumption data of each load L and the adjusted power consumption data to the main active filter 152 through the communication unit 700, and the main active filter 152 may receive such data to use as data that is the basis for power management of the loads L.

The exemplary embodiment of the present invention is described using an example of a wireless communication unit as the communication unit 700, but the present invention may transmit and receive data between one or more active filters 150 through a wired communication network

When the communication unit 700 corresponds to a wireless communication unit, various methods such as a radio frequency (RF) method, a wireless fidelity (Wi-Fi) method, Bluetooth, ZigBee, a near field communication (NFC) method, an ultra wide band (UWB) communication method, and the like may be used as a wireless communication method in exemplary embodiments, and the methods are not restricted as long as the active filters 150 may transmit and receive a wireless communication signal.

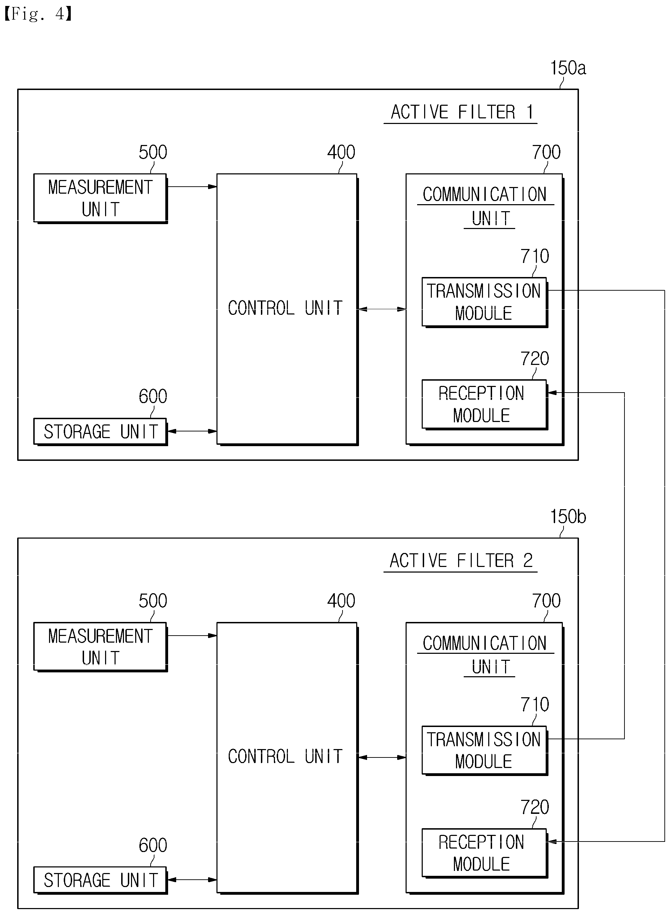

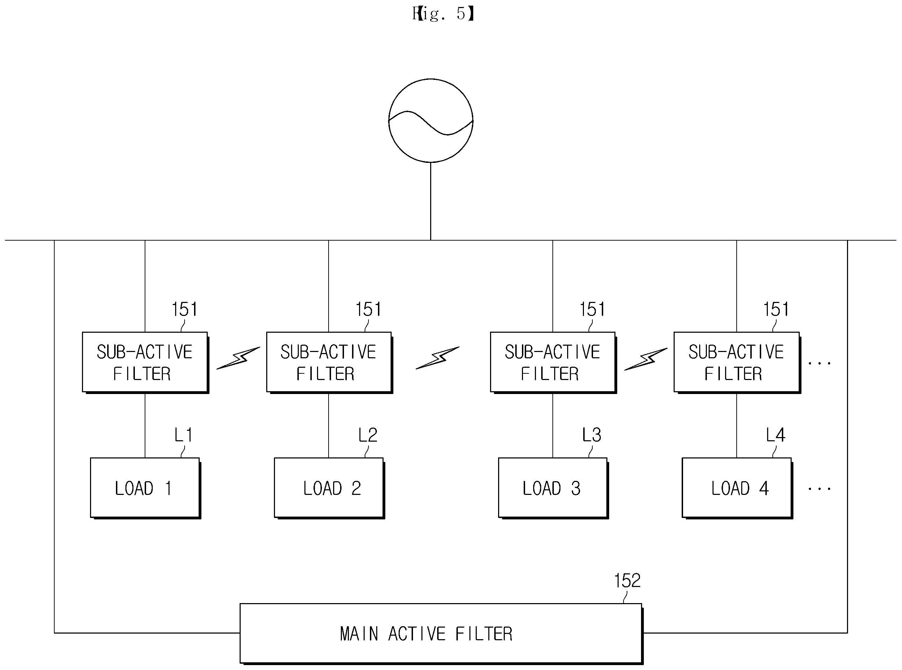

FIG. 4 illustrates a block diagram of a control flow for transmitting and receiving data between the active filters according to the exemplary embodiment of the present invention, and FIG. 5 illustrates a conceptual diagram of a communication function for transmitting and receiving data between the active filters according to the exemplary embodiment of the present invention.

As illustrated in FIG. 2, the active filter 150 may be coupled to each of one or more loads L, and the active filter 150 may acquire data on the power consumed by each of the loads and adjust the power consumption of the load L on the basis of the acquired data and stored data. This acquired data on the power consumption and data on adjusted power consumption may be transmitted to another active filter 150 through the communication unit 700 provided in the active filter 150 by a wired/wireless communication method.

Referring FIG. 4, for convenience of explanation, the active filter 150 may be divided into an active filter 1 150a and an active filter 2 150b, and the active filter 1 150a and the active filter 2 150b may exchange data on power consumption acquired from the load L connected to each of the active filters through the communication unit 700.

In other words, the active filter 1 150a may acquire the data on the power consumed by the connected load L, and the control unit 400 may compare data on reference power consumption of the load L stored in the storage unit 600 and the acquired data on the power consumption and reduce the power consumption of the load L when the acquired data on the power consumption exceeds the stored data. The active filter 1 150a may transmit the data on the power consumption of the load L and data on the reduced power consumption of the load L, as described above, to the active filter 2 150b through the transmission module 710 included in the communication unit 700.

The reception module 720 included in the communication unit 700 of the active filter 2 150b may receive the data on the power consumption transmitted from the transmission module 710 of the active filter 1 150a and store the data on the power consumption in the storage unit 600 or may compare the data on the power consumption with the data on the power consumption stored in the storage unit 600 to use the data on the power consumption for power management of the load L. Further, the active filter 2 150b may transmit at least one of the data on the power consumption of the load L received from the active filter 1 150a via the reception module 720 and the data on the adjusted power consumption to the other active filter 150 through the transmission module 710.

Also, conversely, the active filter 2 150b may also acquire the data on the power consumed by the connected load L, and the control unit 400 included in the active filter 2 150b may compare the data on the reference power consumption of the load L stored in the storage unit 600 with the acquired data on the power consumption and reduce the power consumption of the load L when the acquired data on the power consumption exceeds the stored data. The active filter 2 150b may transmit the data on the power consumption of the load L and the data on the reduced power consumption of the load L, as described above, to the active filter 1 150a through the transmission module 710 included in the communication unit 700.

The reception module 720 included in the communication unit 700 of the active filter 1 150a may receive the data on the power consumption transmitted from the transmission module 710 of the active filter 2 150b and store the data on the power consumption in the storage unit 600 or compare the data with the data on the power consumption already stored in the storage unit 600 of the active filter 1 150a to be used for power management of the load L. Further, the active filter 1 150a may transmit at least one of the data on the power consumption of the load L received from the active filter 2 150b through the reception module 720 and the data on the adjusted power consumption to the other active filter 150 through the transmission module 710.

Referring to FIG. 5, the power management system using a large capacity load in a building or the like includes a large number of loads L, as shown in FIG. 2, and each of the loads L may be connected to the active filter 150. In this case, the active filter 150 may be divided into the sub-active filter 151 and the main active filter 152, and the sub-active filter 151 and the main active filter 152 may be connected to the load to acquire data on power consumption by measuring power consumed by each of the loads L. FIG. 5 illustrates a plurality of loads which are denoted by L1 to L4 and are connected to the sub-active filter 151.

Each of the one or more sub-active filters 151 may be connected to the load L and may adjust the power consumption of the connected load L on the basis of the data on the power consumed by the connected load L. In other words, the sub-active filter 151 may perform power management for the power consumption of the load L connected thereto, and may not perform power management for power consumed by a load L connected to another sub-active filter.

However, the data on the power consumed by the load L connected to the corresponding sub-active filter 151 may be received from another sub-active filter 151, stored in the storage unit 600, and transmitted to the main active filter 152 through the communication unit 700.

In addition, the data on the adjusted power consumption of the load L connected to another sub-active filter 151 may be received from another sub-active filter 151 and stored in the storage unit 600.

Referring to FIG. 5, the sub-active filter 151 connected to a load 1 L1 may transmit data on power consumption and data on an adjusted power of the load 1 L1 to the sub-active filter 151 connected to each of a load 2 L2, a load 3 L3, and a load 4 L4. Such power data transmission and reception may be similarly applied to the sub-active filter 151 connected to each of the load 2 L2, the load 3 L3, and the load 4 L4.

The sub-active filters 151 may transmit and receive data with each other via various wireless communication methods such as an RF method, a Wi-Fi method, Bluetooth, ZigBee, an NFC method, a UWB communication method, and the like, but may also transmit and receive data with each other by a wired communication method other than the wireless communication method.

As shown in FIG. 5, the main active filter 152 may not be independently connected to the load L. That is, the main active filter 152 may collectively manage the power consumed by at least one load L on the power management system, and manage power consumed by each of the loads L on the basis of the stored data on the power consumption.

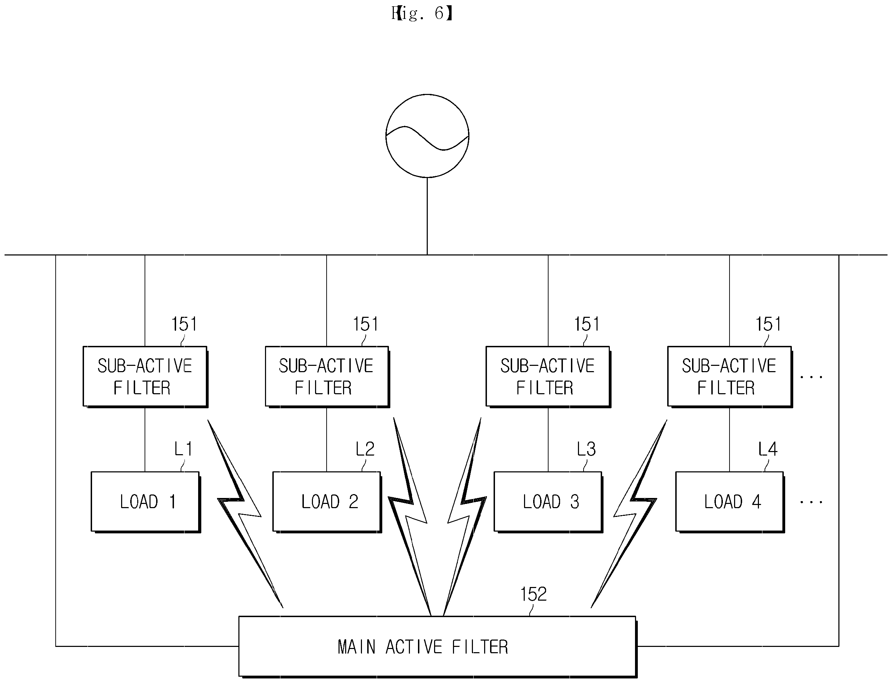

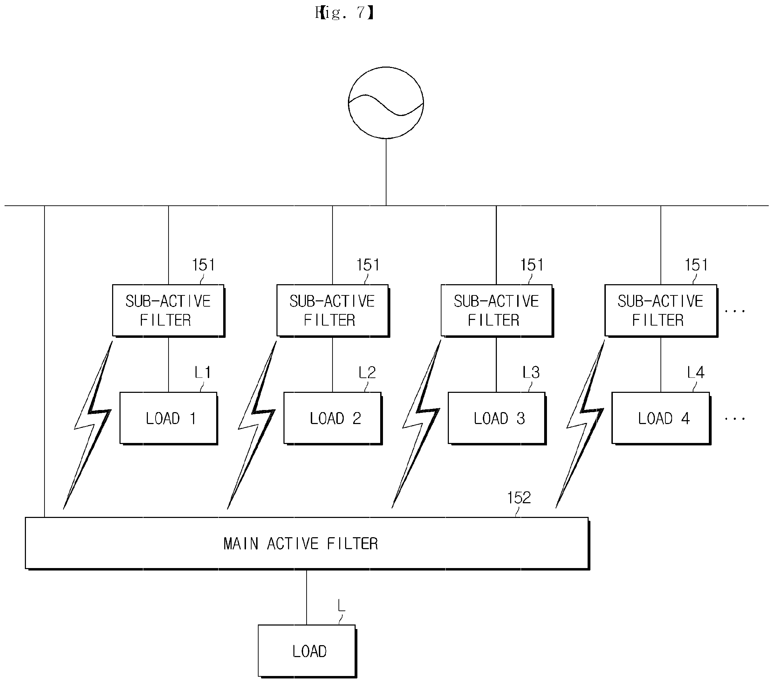

FIGS. 6 and 7 illustrate a conceptual diagram of a communication function for transmitting and receiving data between the sub-active filter and the main active filter according to the exemplary embodiment of the present invention.

The main active filter 152 may not be independently connected to the load L, as shown in FIG. 6, or may be independently connected to the load L, as shown in FIG. 7.

The main active filter 152 may collectively manage power consumed by at least one another load L in the power management system when the main active filter 152 is not independently connected to the load L, and the main active filter 152 may manage power consumed by the connected load L and another loads L when the main active filter 152 is independently connected to the load L.

The main active filter 152 may have the same configuration as that of the sub-active filter 151, but the sub-active filter 151 may also operate as the main active filter 152 according to a preset value and the main active filter 152 may also operate as the sub-active filter 151.

As shown in FIGS. 6 and 7, each of the sub-active filters 151 connected to at least one load L may transmit the data on the power consumption acquired from the load L through the communication unit 700 and the data on the adjusted power consumption of the load to the main active filter 152.

Each of the sub-active filters 151 may transmit data on the power consumption of the load L received from another sub-active filters 151 to the main active filter 152. The main active filter 152 may receive the data on the power consumed by the load L from at least one sub-active filter 151 through the communication unit 700.

A reference power consumption value with respect to the power consumed by at least one load L may be stored in the storage unit 600 of the main active filter 152, and the main active filter 152 may compare the data on the power consumption of the load L received from the at least one sub-active filter 151 with the stored reference power consumption value of the load L.

As a result of the comparison, when the power consumption value of the load L received from the sub-active filter 151 exceeds the stored reference power consumption value, a control signal for reducing the power consumption of the load L may be transmitted to the sub-active filter 151 connected to the corresponding load L. The sub-active filter 151 receiving the control signal for reducing the power consumption from the main active filter 152 may reduce the power consumption of the load L by reducing an amount of operation of the connected load L or turning off the power under the control of the control unit 400.

In addition, the main active filter 152 may not transmit the control signal for reducing power consumption to the sub-active filter 151, and may directly control the control unit 400 of the sub-active filter 151 connected to the load L that is consuming power exceeding the reference value to reduce the power consumption of the load L.

According to another exemplary embodiment of the present invention, the sub-active filters 151 connected to each of one or more loads may directly reduce a power consumption of the load L under the control of the control unit 400 on the basis of the acquired data on the power consumption of the load L, and may transmit data on the reduced power consumption to the main active filter 152. Accordingly, the main active filter 152 may receive data on adjusted power consumption of the load L and store the data on the adjusted power consumption in the storage unit 600, and the stored data may be used for power management regarding the entire load L.

The sub-active filter 151 and the main active filter 152 may similarly transmit and receive data with each other via various wireless communication methods such as an RF method, a Wi-Fi method, Bluetooth, ZigBee, an NFC method, a UWB communication method, and the like, but may also transmit and receive data via a wired communication method other than the wireless communication method.

FIGS. 5 to 7 illustrate the multi-type air handling units 11a and 11b in which the active filter 150 is connected to the load L in series, but the drawings may also be similarly applied to a case in which the active filter 150 is connected to the load L in parallel, as shown in FIGS. 1B and 2B.

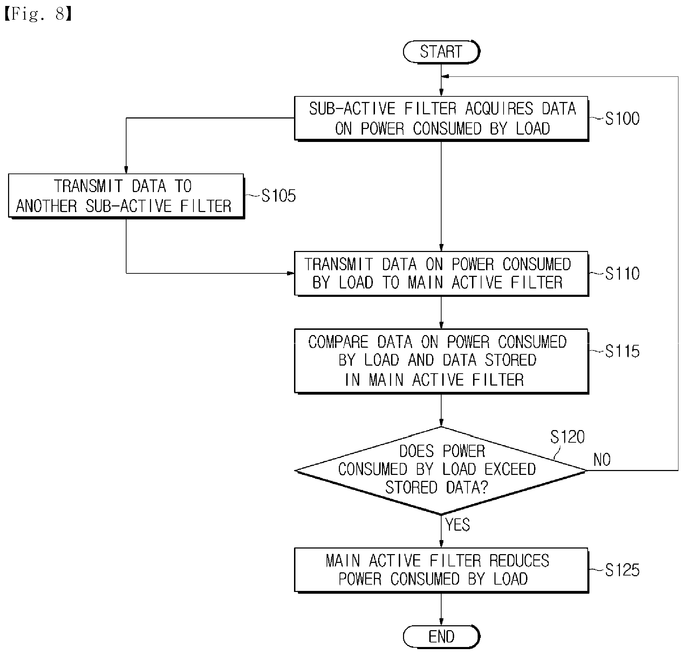

FIG. 8 illustrates a control flowchart of a power management system in which a main active filter performs power management according to power consumption data according to the exemplary embodiment of the present invention.

Referring to FIG. 8, in the power management system, at least one sub-active filter 151 may be connected to at least one load L to acquire data on power consumed by each of the loads L (S100).

In other words, the measurement unit 500 of the sub-active filter 151 may measure an electric signal of the load L, and the control unit 400 may acquire data on the power consumed by the load L on the basis of the electric signal of the load L received from the measurement unit 500.

The at least one sub-active filter 151 may transmit the acquired data on power consumption of the load L to another sub-active filter 151 through the transmission module 710 of the communication unit 700 (S105), and another sub-active filter 151 receiving the data may similarly transmit the data on the power consumption of the load L to the main active filter 152 (S110).

In addition, the at least one sub-active filter 151 may directly transmit the acquired data on the power consumption of the load L to the main active filter 152 through the transmission module 710 of the communication unit 700 (S110).

The main active filter 152 may compare the power consumption data of the load L received in operation S110 with reference power consumption data of the load L stored in the storage unit 600 (S115). In other words, since the reference power consumption data for the at least one load L connected to the at least one sub-active filter 151 is stored in the storage unit 600 of the main active filter 152, the reference power consumption data may be compared with current power consumption data of the load L acquired by the at least one sub-active filter 151 and transmitted to the main active filter 152.

The control unit 400 of the main active filter 152 may determine whether the current power consumption data of the load L exceeds the reference power consumption data of the load L stored in the storage unit 600 (S120).

When it is found that the current power consumption data does not exceed the reference power consumption data as a result of the determination, the process of receiving the power consumption data of the load L from the sub-active filter 151 may be repeatedly performed because it is not necessary to adjust the power consumption of the corresponding load L.

However, when it is found that the current power consumption of the load L exceeds the stored reference power consumption of the load L as a result of the determination, the main active filter 152 may reduce the power consumption of the corresponding load L (S125). That is, the main active filter 152 may output data on an amount of reduction of the power consumption of the load L calculated by the control unit 400 of the main active filter 152 and a consequential reduction of operation of the load L and transmit the data to the communication unit 700 of the sub-active filter 151 connected to the corresponding load L through the communication unit 700, and the control unit 400 of the sub-active filter 151 receiving the data may reduce the power consumption of the connected load L on the basis of the adjusted power consumption value calculated and adjusted by the main active filter 152.

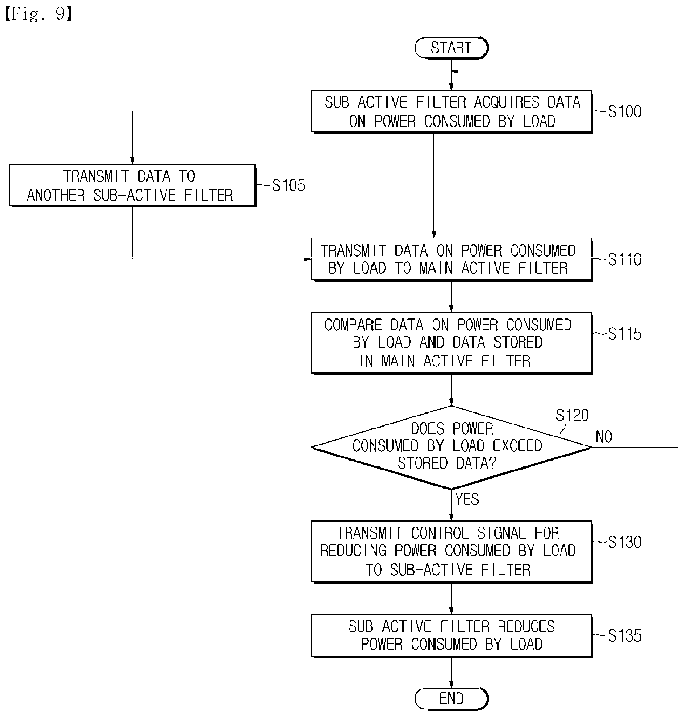

FIG. 9 illustrates a control flowchart of a power management system in which a sub-active filter performs power management according to power consumption data according to the exemplary embodiment of the present invention.

Referring to FIG. 9, in the power management system, at least one sub-active filter 151 may be connected to at least one load L to acquire data on the power consumed by each of the loads L (S100).

In other words, the measurement unit 500 of the sub-active filter 151 may measure an electric signal of the load L, and the control unit 400 may acquire data on power consumed by the load L on the basis of the electric signal of the load L received from the measurement unit 500.

The at least one sub-active filter 151 may transmit the acquired data on the power consumption of the load L to another sub-active filter 151 through the transmission module 710 of the communication unit 700 (S105), and another sub-active filter 151 receiving the data may similarly transmit the data on the power consumption of the load L to the main active filter 152 (S110).

In addition, the at least one sub-active filter 151 may directly transmit the acquired data on the power consumption of the load L to the main active filter 152 through the transmission module 710 of the communication unit 700 (S110).

The main active filter 152 may compare the power consumption data of the load L received in operation S110 with reference power consumption data of the load L stored in the storage unit 600 (S115). In other words, since the reference power consumption data for the at least one load L connected to the at least one sub-active filter 151 is stored in the storage unit 600 of the main active filter 152, the data may be compared with the current consumption power data of the load L acquired by the at least one sub-active filter 151 and transmitted to the main active filter 152.

The control unit 400 of the main active filter 152 may determine whether the current power consumption data of the load L exceeds the reference power consumption data of the load L stored in the storage unit 600 (S120).

When it is found that the current power consumption data of the load L does not exceed the reference power consumption data of the load L as a result of the determination, the process of receiving the power consumption data of the load L from the sub-active filter 151 may be repeated because it is not necessary to adjust the power consumption of the corresponding load L.

However, when it is found that the current power consumption of the load L exceeds the reference power consumption of the stored load L as the result of the determination, the main active filter 152 may transmit a control signal for reducing the power consumption of the load L to the sub-active filter 151 (S130).

In other words, the main active filter 152 may transmit a control signal indicating that the current power consumption of the load L exceeds the stored reference power consumption of the load L to the sub-active filter 151 connected to the corresponding load L through the transmission module 710 of the communication unit 700, and the control unit 400 of the sub-active filter 151 receiving the control signal may reduce the power consumption of the load L on the basis of the reference power consumption data of the load L stored in the storage unit 600 (S135).

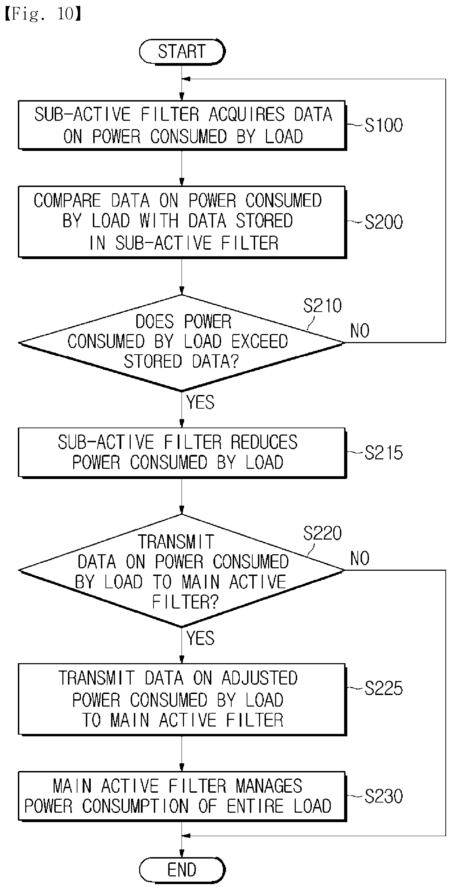

FIG. 10 illustrates a control flowchart of a power management system in which a sub-active filter adjusts power consumption according to power consumption data and a main active filter manages power consumption of an entire load according to the exemplary embodiment of the present invention.

Referring to FIG. 10, in the power management system, at least one sub-active filter 151 may be connected to at least one load L to acquire data on power consumed by each of the loads L (S100).

In other words, the measurement unit 500 of the sub-active filter 151 may measure an electric signal of the load L, and the control unit 400 may acquire data on power consumed by the load L on the basis of the electric signal of the load L received from the measurement unit 500.

The control unit 400 of the sub-active filter 151 may compare the acquired power consumption data of the load L with reference power consumption data of the load L stored in the storage unit 600 (S200). That is, since the reference power consumption data of the load L connected to the sub-active filter 151 is stored in the storage unit 600 of the sub-active filter 151, the reference power consumption data may be compared with the data on the power consumption of the load L acquired by the control unit 400.

Further, the control unit 400 of the sub-active filter 151 may determine whether the current power consumption data of the load L exceeds the reference power consumption data of the load L stored in the storage unit 600 (S210).

When it is found that the current power consumption of the load L does not exceed the stored reference power consumption of the load L as a result of the determination, the sub-active filter 1510 may repeat the process of acquiring the power consumption data of the load L because it is not necessary to adjust the power consumption of the connected load L.

However, when the current power consumption of the load L exceeds the stored reference power consumption of the load L as the result of the determination, the sub-active filter 151 may reduce the power consumption of the load L (S215). That is, data on a required value of an amount of reduction in the power consumption of the load L calculated by the control unit 400 of the sub-active filter 151 and a consequential reduction in an amount of operation of the load L may be calculated to reduce the power consumption of the connected load L.

The control unit 400 of the sub-active filter 151 may determine whether data on the power consumption of the load L adjusted by the control unit 400 of the sub-active filter 151 will be transmitted to the main active filter 152 (S220). That is achieved by the main active filter 152 receiving data on the power consumed by at least one load L connected to the at least one sub-active filter 151 and determining whether the data on the power consumed by the at least one load L will be used to manage power of the entire power management system.

That is, when the power amount consumed by the at least one load L included in the power management system exceeds a certain standard, the sub-active filter 151 may transmit the data on the adjusted power consumption of the load L to the main active filter 152 because the main active filter 152 should grasp the adjusted amount of power consumption of each of the loads L to manage the power consumption in the entire power system (S225).

The main active filter 152 may manage the power consumption of the entire load L included in the power management system on the basis of the data on the adjusted power consumption of the load L transmitted from the at least one sub-active filter 151 (S230).

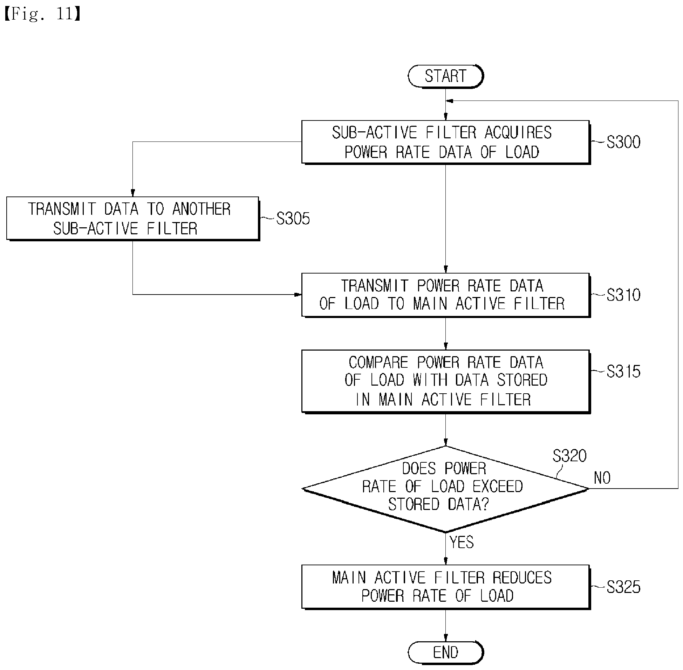

FIG. 11 illustrates a control flowchart of a power management system in which a main active filter according to the exemplary embodiment of the present invention performs power management in accordance with power rate data.

Referring to FIG. 11, in the power management system, at least one sub-active filter 151 is connected to at least one load L to acquire power rate data based on power consumed by each of the loads L (S300). The power rate based on the power consumption of the load L may be a cumulative rate of the power consumed by the load L or an average rate of the power consumption.

The measurement unit 500 of the sub-active filter 151 may measure an electric signal of the load L, and the control unit 400 may acquire the power rate data on the power consumed by the load L on the basis of the electric signal of the load L received from the measurement unit 500.

The at least one sub-active filter 151 may transmit data on the acquired power rate data on the power consumption of the load L to another sub-active filter 151 through the transmission module 710 of the communication unit 700 (S305), and another sub-active filter 151 receiving the data may similarly transmit the power rate data based on the power consumption of the load L to the main active filter 152 (S310).

Also, the at least one sub-active filter 151 may directly transmit the acquired power rate data based on the power consumption of the load L to the main active filter 152 through the transmission module 710 of the communication unit 700 (S310).

The main active filter 152 may compare the power rate data of the load L received in operation S110 with reference power rate data of the load L stored in the storage unit 600 (S315). That is, since the reference power rate data for the at least one load L connected to the at least one sub-active filter 151 is stored in the storage unit 600 of the main active filter 152, reference power rate data may be compared with the power rate data based on the current power consumption of the load L acquired by the at least one sub-active filter 151 and transmitted to the main active filter 152.

The control unit 400 of the main active filter 152 may determine whether the power rate based on the current power consumption of the load L exceeds the reference power rate of the load L stored in the storage unit 600 (S320).

When it is found that the power rate based on the current power consumption of the load L does not exceed the reference power rate of the load L as a result of the determination, the process of receiving the power rate data of the load L from the sub-active filter 151 may be repeated because it is not necessary to adjust the power consumption of the corresponding load L.

However, when it is found that the power rate of the power currently consumed by the load L exceeds the stored reference power rate of the load L as the result of the determination, the main active filter 152 may reduce the power consumption of the corresponding load L (S325). That is, the main active filter 152 may output data for an amount of reduction in the power consumption of the load L calculated by the control unit 400 of the sub-active filter 151 and a consequential amount of reduction in operation of the load L, and transmit the data to the communication unit 700 of the sub-active filter 151 connected to the corresponding load L through the communication unit 700, and the control unit 400 of the sub-active filter 151 receiving the data may reduce the power consumption of the connected load L on the basis of an adjustment value of the power consumption calculated and adjusted by the main active filter 152.

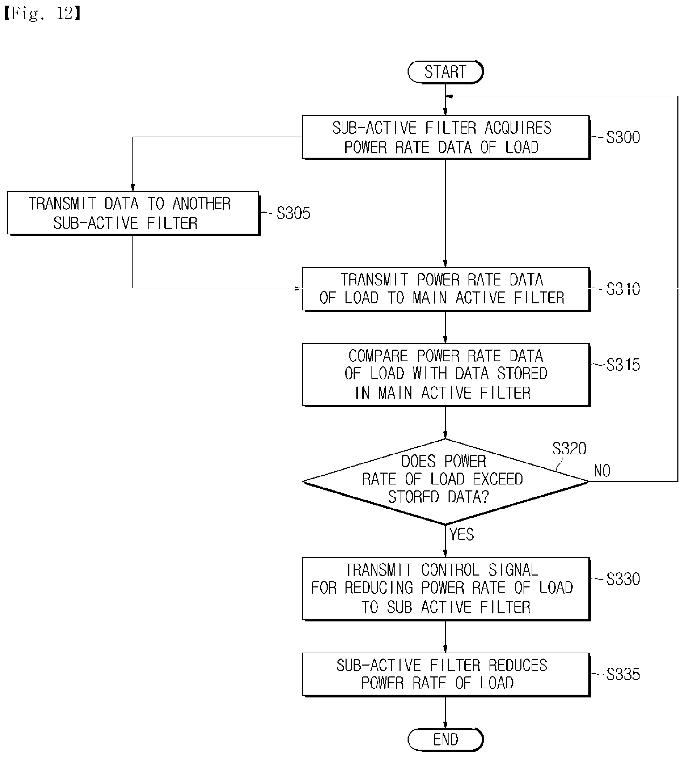

FIG. 12 illustrates a control flowchart of a power management system in which a sub-active filter according to the exemplary embodiment of the present invention performs power management in accordance with power rate data.

Referring to FIG. 12, in the power management system, at least one sub-active filter 151 may be connected to at least one load L to acquire power rate data based on power consumed by each of the loads L (S300). The power rate based on the power consumption of the load L may be a cumulative rate of the power consumed by the load L or an average rate of the power consumption.

The measurement unit 500 of the sub-active filter 151 may measure an electric signal of the load L and the control unit 400 may acquire the power rate data of the power consumed by the load L on the basis of the electric signal of the load L received from the measurement unit 500

The at least one sub-active filter 151 may transmit the acquired power rate data based on the power consumption of the load L to another sub-active filter 151 through the transmission module 710 of the communication unit 700 (S305), and another sub-active filter 151 receiving the data may similarly transmit the power rate data based on the power consumption of the load L to the main active filter 152 (S310).

Further, the at least one sub-active filter 151 may directly transmit the acquired power rate data based on the power consumption of the load L to the main active filter 152 through the transmission module 710 of the communication unit 700 (S310).

The main active filter 152 may compare the power rate data of the load L received in operation S110 with reference power rate data of the load L stored in the storage unit 600 (S315). That is, since the reference power rate data for the at least one load L connected to the at least one sub-active filter 151 is stored in the storage unit 600 of the main active filter 152, the reference power rate data may be compared with the power rate data based on the current consumption power of the load L acquired by the at least one sub-active filter 151 and transmitted to the main active filter 152.

The control unit 400 of the main active filter 152 may determine whether the power rate based on the current power consumption of the load L exceeds the reference power rate of the load L stored in the storage unit 600 (S320).

When it is found that the power rate based on the current power consumption of the load L does not exceed the reference power rate of the load L as a result of the determination, the process of receiving the power rate data based on the power consumption of the load L from the sub-active filter 151 may be repeated because it is not necessary to adjust the power consumption of the load L.

However, when it is found that the current power consumption of the load L exceeds the stored reference power consumption of the load L as the result of the determination, the main active filter 152 may transmit a control signal for reducing the power consumption of the load L to the sub-active filter 151 (S330).

In other words, the main active filter 152 may transmit a control signal indicating that the power rate based on the current power consumption of the load L exceeds the stored reference power rate of the load L via the transmission module 710 of the communication unit 700 to the sub-active filter 151 connected to the corresponding load L, and the control unit 400 of the sub-active filter 151 receiving the control signal may reduce the power consumption of the load L on the basis of the reference power consumption data of the load L stored in the storage unit 600 (S335).

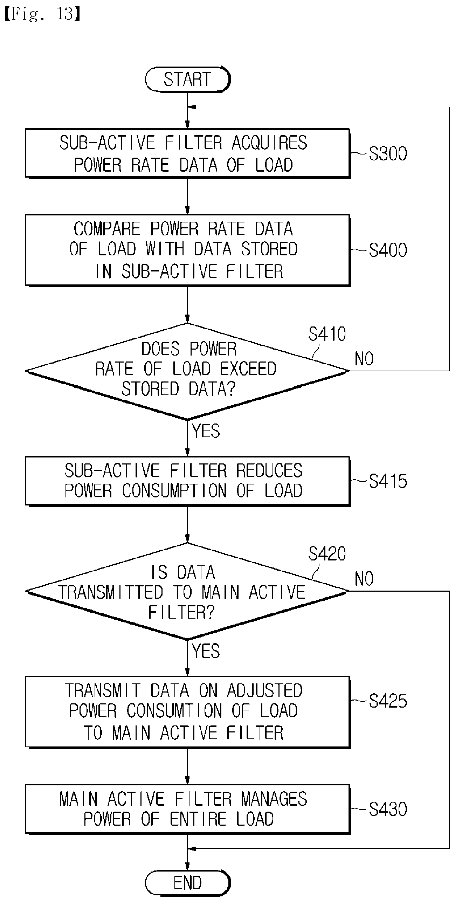

FIG. 13 illustrates a control flowchart of a power management system in which a sub-active filter adjusts power consumption and a main active filter manages power consumption of an entire load in accordance with power rate data based on power consumption according to the exemplary embodiment of the present invention.

Referring to FIG. 13, in the power management system, at least one sub-active filter 151 may be connected to at least one load L to acquire power rate data based on power consumed by each of the loads L (S300). The power rate based on the power consumption of the load L may be a cumulative rate of the power consumed by the load L or an average rate of the power consumption.

In other words, the measurement unit 500 of the sub-active filter 151 may measure an electric signal of the load L, and the control unit 400 may acquire the power rate data of the power consumed by the load L on the basis of the electric signal of the load L received from the measurement unit 500.

The control unit 400 of the sub-active filter 151 may compare the acquired power rate data of the load L with reference power rate data of the load L stored in the storage unit 600 (S400). That is, since the reference power rate data for the load L connected to the sub-active filter 151 is stored in the storage unit 600 of the sub-active filter 151, the reference power rate data may be compared with the power rate data of the load L acquired by the control unit 400.

Also, the control unit 400 of the sub-active filter 151 may determine whether the power rate data based on the current power consumption of the load L exceeds the reference power rate data of the load L stored in the storage unit 600 (S410).

When it is found that the power rate data based on the current power consumption of the load L does not exceed the reference power rate data of the load L as a result of the determination, the sub-active filter 151 may repeat the process of acquiring the power rate data based on the power consumption of the load L because the sub-active filter 151 does not need to adjust the power consumption of the connected load L

However, when it is found that the current power rate of the load L exceeds the stored reference power rate of the load L as the result of the determination, the sub-active filter 151 may reduce the power consumption of the load L (S415). That is, data on a required value of an amount of reduction in the power consumption of the load L calculated by the control unit 400 of the sub-active filter 151 and a consequential reduction in an amount of operation of the load L may be calculated to reduce the power consumption of the connected load L.

As described above, the control unit 400 of the sub-active filter 151 may determine whether the data on the power consumption of the load L adjusted by the control unit 400 of the sub-active filter 151 will be transmitted to the main active filter 152 (S420). This is that the main active filter 152 receives the data on the power consumed by the at least one load L connected to the at least one sub-active filter 151, the power rate data based thereon, and the data on the adjusted power consumed by the load L and determines whether the data will be used to manage power and a power rate of the entire power management system.

In other words, when the power amount consumed by the at least one load L included in the power management system and the power rate based thereon exceed a certain standard, the sub-active filter 151 may transmit the data on the adjusted power consumption of the load L to the main active filter 152 because the main active filter 152 should grasp the adjusted power consumption amount of each of the loads L and the power rate thereof to manage the power consumption and the power rate in the entire power system (S425).

The main active filter 152 may manage the power consumption of the entire load L included in the power management system on the basis of the data on the adjusted power consumption and the power rate of the load L received from the at least one sub-active filter 151 (S430).

An active filter and a power management system including the active filter have been described with reference to the drawings exemplified above and focusing on the preferred exemplary embodiments. The active filter and the power management system including the active filter are not limited thereto, and the exemplary embodiments described above are exemplary in all respects.

## Claims

1. An active filter (150) for reducing harmonics of power current of a load (L) including an electronic device,
wherein the active filter is installed in series or in parallel on a line connected from an AC power source to the non-linear adjustable load to remove the harmonic components,
the active filter comprising:
a measurement unit (500) configured to measure an electrical signal of the load;
a control unit (400) configured to acquire data on power consumed by the load based on the measured electrical signal of the load and adjust the power consumed by the load on the basis of a result of a comparison between the acquired data and preset power consumption data of the load; and
a communication unit (700) configured to transmit at least one of the acquired data and data on the adjusted power consumption,
wherein the control unit (400) is configured to control the communication unit (700) to transmit, to the load, a control signal for adjusting the power consumption of the load.

2. The active filter of claim 1, wherein the control unit is adapted to compare the data on the power consumption of the load based on the electrical signal measured by the measurement unit with the preset power consumption data of the load, and is configured to reduce the power consumption of the load when the power consumption of the load exceeds the preset power consumption data.

3. The active filter of claim 1, further comprising a storage unit (600) configured to store the preset power consumption data of the load.

4. The active filter of claim 3, wherein the control unit is adapted to compare the power consumption of the load and the power consumption data stored in the storage unit and is configured to reduce the power consumption of the load when the power consumption of the load exceeds the stored power consumption data.

5. The active filter of claim 1, wherein the electrical signal includes at least one of a power signal, a voltage signal, and a current signal based on an operation of the load.

6. The active filter of claim 1, wherein the communication unit is adapted to transmit at least one of the acquired data on the power consumed by the load and the data on the adjusted power consumed by the load to a second active filter (150) connected to a second load and is adapted to receive at least one of data on power consumed by the second load and data on adjusted power consumed by the second load from the second active filter connected to the second load.

7. The active filter of claim 6, wherein:
the communication unit is adapted to transmit and receive the data via a wireless communication method; and
the wireless communication method includes a radio frequency (RF) method, a wireless fidelity (Wi-Fi) method, Bluetooth, ZigBee, a near field communication (NFC) method, and an ultra wide band (UWB) communication method.

8. The active filter of claim 6, wherein the control unit is configured to compare data on power consumed by at least one second load received by the communication unit with preset data on power consumed by the at least one second load and is configured to transmit a control signal for reducing the power consumed by the at least one second load when the power consumed by the at least one second load exceeds the data on the preset power consumed by the at least one second load.

9. The active filter of claim 8, wherein the storage unit is configured to store the data on the preset power consumed by the at least one second load.

10. The active filter of claim 9, wherein the control unit is adapted to compare the data on the power consumed by the at least one second load received by the communication unit with the data on the power consumed by the at least one second load previously stored in the storage unit and is adapted to transmit a control signal for reducing the power consumed by the at least one second load when the power consumed by the at least one second load exceeds the previously stored data on the power consumed by the at least one second load.

11. The active filter of claim 1, wherein the electronic device included in the load includes a system air conditioner, a refrigerator, and a washing machine.

12. The active filter of claim 1, further comprising:
a measurement unit (500) configured to measure the electrical signal of the load;
a control unit (400) configured to acquire the data on the power consumed by the load based on the measured electrical signal of the load and configured to adjust the power consumed by the load based on the result of the comparison between the acquired data and the data on the preset power consumed by the load; and
a wireless communication unit (700) configured to transmit at least one of the acquired data and the data on the adjusted power consumed by the load via a wireless communication method.

## Patentansprüche

1. Aktiver Filter (150) zum Verringern von Oberwellen des Leistungsstroms eines Verbrauchers (L), der eine elektronische Vorrichtung einschließt,
wobei der aktive Filter in Reihe oder parallel an einer Leitung installiert ist, die von einer Wechselstromquelle mit dem nichtlinear einstellbaren Verbraucher verbunden ist, um die harmonischen Komponenten zu entfernen,
wobei der aktive Filter Folgendes umfasst:
eine Messeinheit (500), die konfiguriert ist, um ein elektrisches Signal des Verbrauchers zu messen;
eine Steuereinheit (400), die dazu konfiguriert ist, Daten über die von dem Verbraucher verbrauchte Leistung basierend auf dem gemessenen elektrischen Signal des Verbrauchers zu erfassen und die von dem Verbraucher verbrauchte Leistung basierend auf einem Ergebnis eines Vergleichs zwischen den erfassten Daten und voreingestellten Leistungsverbrauchsdaten des Verbrauchers einzustellen; und
eine Kommunikationseinheit (700), die dazu konfiguriert ist, zumindest eines der erfassten Daten und Daten über den eingestellten Leistungsverbrauch zu übertragen,
wobei die Steuereinheit (400) konfiguriert ist, um die Kommunikationseinheit (700) zu steuern, um an den Verbraucher ein Steuersignal zum Einstellen des Leistungsverbrauchs des Verbrauchers zu übertragen.

2. Aktiver Filter nach Anspruch 1, wobei die Steuereinheit angepasst ist, um die Daten über den Leistungsverbrauch des Verbrauchers basierend auf dem elektrischen Signal, das von der Messeinheit gemessen wird, mit den voreingestellten Leistungsverbrauchsdaten des Verbrauchers zu vergleichen, und konfiguriert ist, um den Leistungsverbrauch des Verbrauchers zu verringern, wenn der Leistungsverbrauch des Verbrauchers die voreingestellten Leistungsverbrauchsdaten überschreitet.

3. Aktiver Filter nach Anspruch 1, der ferner eine Speichereinheit (600) umfasst, die konfiguriert ist, um die voreingestellten Leistungsverbrauchsdaten des Verbrauchers zu speichern.

4. Aktiver Filter nach Anspruch 3, wobei die Steuereinheit angepasst ist, um den Leistungsverbrauch des Verbrauchers und die in der Speichereinheit gespeicherten Leistungsverbrauchsdaten zu vergleichen und konfiguriert ist, um den Leistungsverbrauch des Verbrauchers zu verringern, wenn der Leistungsverbrauch des Verbrauchers die gespeicherten Leistungsverbrauchsdaten überschreitet.

5. Aktiver Filter nach Anspruch 1, wobei das elektrische Signal mindestens eines von einem Leistungssignal, einem Spannungssignal und einem Stromsignal basierend auf einem Betrieb des Verbrauchers einschließt.

6. Aktiver Filter nach Anspruch 1, wobei die Kommunikationseinheit angepasst ist, um mindestens eines der erfassten Daten über die von dem Verbraucher verbrauchte Leistung und der Daten über die eingestellte von dem Verbraucher verbrauchte Leistung an einen zweiten aktiven Filter (150) zu übertragen, der mit einem zweiten Verbraucher verbunden ist und angepasst ist, um mindestens eines von Daten über die von dem zweiten Verbraucher verbrauchte Leistung und Daten über die eingestellte von dem zweiten Verbraucher verbrauchte Leistung von dem zweiten aktiven Filter zu empfangen, der mit dem zweiten Verbraucher verbunden ist.

7. Aktiver Filter nach Anspruch 6, wobei:
die Kommunikationseinheit angepasst ist, um die Daten über ein drahtloses Kommunikationsverfahren zu übertragen und empfangen; und
das drahtlose Kommunikationsverfahren ein Hochfrequenz(HF)-Verfahren, ein Wireless-Fidelity(Wi-Fi)-Verfahren, Bluetooth-, ZigBee-, Nahfeldkommunikations(NFC)-Verfahren und ein Ultrabreitband(UWB)-Kommunikationsverfahren einschließt.

8. Aktiver Filter nach Anspruch 6, wobei die Steuereinheit konfiguriert ist, um Daten über die von mindestens einem zweiten Verbraucher verbrauchte Leistung, die von der Kommunikationseinheit empfangen werden, mit voreingestellten Daten über die von dem mindestens einen zweiten Verbraucher verbrauchte Leistung zu vergleichen und konfiguriert ist, um ein Steuersignal zu übertragen, um die von dem mindestens einen zweiten Verbraucher verbrauchte Leistung zu verringern, wenn die von dem mindestens einen zweiten Verbraucher verbrauchte Leistung die Daten über die voreingestellte von dem mindestens einen zweiten Verbraucher verbrauchte Leistung überschreitet.

9. Aktiver Filter nach Anspruch 8, wobei die Speichereinheit konfiguriert ist, um die Daten über die voreingestellte von dem mindestens einen zweiten Verbraucher verbrauchte Leistung zu speichern.

10. Aktiver Filter nach Anspruch 9, wobei die Steuereinheit angepasst ist, um die Daten über die von dem mindestens einen zweiten Verbraucher verbrauchte Leistung, die von der Kommunikationseinheit empfangen werden, mit den Daten über die von dem mindestens einen zweiten Verbraucher verbrauchte Leistung zu vergleichen, die zuvor in der Speichereinheit gespeichert wurden und angepasst sind, um ein Steuersignal zu übertragen, um die von dem mindestens einen zweiten Verbraucher verbrauchte Leistung zu verringern, wenn die von dem mindestens einen zweiten Verbraucher verbrauchte Leistung die zuvor gespeicherten Daten über die von dem mindestens einen zweiten Verbraucher verbrauchte Leistung überschreitet.

11. Aktiver Filter nach Anspruch 1, wobei die in dem Verbraucher eingeschlossene elektronische Vorrichtung eine Systemklimaanlage, einen Kühlschrank und eine Waschmaschine einschließt.

12. Aktiver Filter nach Anspruch 1, ferner umfassend:
eine Messeinheit (500), die konfiguriert ist, um das elektrische Signal des Verbrauchers zu messen;
eine Steuereinheit (400), die konfiguriert ist, um die Daten über die von dem Verbraucher verbrauchte Leistung basierend auf dem gemessenen elektrischen Signal des Verbrauchers zu erfassen und konfiguriert ist, um die von dem Verbraucher verbrauchte Leistung basierend auf dem Ergebnis des Vergleichs zwischen den erfassten Daten und den Daten über die voreingestellte von dem Verbraucher verbrauchte Leistung einzustellen; und
eine drahtlose Kommunikationseinheit (700), die konfiguriert ist, um mindestens eines der erfassten Daten und der Daten über die eingestellte von dem Verbraucher verbrauchte Leistung über ein drahtloses Kommunikationsverfahren zu übertragen.

## Revendications

1. Filtre actif (150) destiné à réduire les harmoniques du courant de puissance d'une charge (L) comprenant un dispositif électronique,
ledit filtre actif étant installé en série ou en parallèle sur une ligne connectée à partir d'une source de puissance CA, à la charge réglable non linéaire pour éliminer les composantes harmoniques, le filtre actif comprenant :
une unité de mesure (500) conçue pour mesurer un signal électrique de la charge ;
une unité de commande (400) conçue pour acquérir des données sur la puissance consommée par la charge sur la base du signal électrique mesuré de la charge et régler la puissance consommée par la charge sur la base d'un résultat d'une comparaison entre les données acquises et les données de consommation de puissance prédéfinies de la charge ; et
une unité de communication (700) conçue pour émettre au moins l'une des données acquises et des données sur la consommation de puissance réglée,
ladite unité de commande (400) étant conçue pour commander l'unité de communication (700) afin d'émettre, vers la charge, un signal de commande en vue du réglage de la consommation de puissance de la charge.

2. Filtre actif selon la revendication 1, ladite unité de commande étant adaptée pour comparer les données sur la
consommation de puissance de la charge sur la base du signal électrique mesuré par l'unité de mesure avec les données de consommation de puissance prédéfinies de la charge, et étant conçue pour réduire la
consommation de puissance de la charge lorsque la consommation de puissance de la charge dépasse les données de consommation de puissance prédéfinies.

3. Filtre actif selon la revendication 1, comprenant en outre une unité de stockage (600) conçue pour stocker les données de consommation de puissance prédéfinies de la charge.

4. Filtre actif selon la revendication 3, ladite unité de commande étant adaptée pour comparer
la consommation de puissance de la charge et les données de consommation de puissance stockées dans l'unité de stockage et étant conçue pour réduire
la consommation de puissance de la charge lorsque la consommation de puissance de la charge dépasse les données de consommation de puissance stockées.

5. Filtre actif selon la revendication 1, ledit signal électrique comprenant au moins l'un d'un signal de puissance, d'un signal de tension et d'un signal de courant sur la base d'un fonctionnement de la charge.

6. Filtre actif selon la revendication 1, ladite unité de communication étant adaptée pour émettre au moins
l'une des données acquises sur la puissance consommée par la charge et des données sur la puissance réglée consommée par la charge vers un second filtre actif (150) connecté à une seconde charge et étant adaptée pour recevoir au moins l'une des données sur la puissance consommée par la seconde charge et des données sur la puissance réglée consommée par la seconde charge provenant du second filtre actif
connecté à la seconde charge.

7. Filtre actif selon la revendication 6,
ladite unité de communication étant adaptée pour émettre et recevoir les données par l'intermédiaire d'un procédé de communication sans fil ;
et
ledit procédé de communication sans fil comprenant un procédé de radiofréquence (RF), un procédé de fidélité sans fil (Wi-Fi), un Bluetooth, un ZigBee, un procédé de communication en champ proche (NFC) et un procédé de communication à bande ultra large (UWB).

8. Filtre actif selon la revendication 6, ladite unité de commande étant conçue pour comparer des données sur la puissance
consommée par au moins une seconde charge reçue par l'unité de communication avec des données prédéfinies sur la puissance consommée par la au moins une seconde charge et étant conçue pour émettre un signal de commande
en vue de la réduction de la puissance consommée par la au moins une seconde charge lorsque la puissance consommée par la au moins une seconde charge dépasse les données sur la puissance prédéfinie consommée par la au moins une seconde charge.

9. Filtre actif selon la revendication 8, ladite unité de stockage étant conçue pour stocker les données sur le
puissance prédéfinie consommée par la au moins une seconde charge.

10. Filtre actif selon la revendication 9, ladite unité de commande étant adaptée pour comparer les données sur le
puissance consommée par la au moins une seconde charge reçue par l'unité de communication avec les données sur la puissance consommée par la au moins une seconde charge précédemment stockées dans l'unité de stockage et étant adaptée pour émettre
un signal de commande en vue de la réduction la puissance consommée par la au moins une seconde charge lorsque la puissance consommée par la au moins une seconde charge dépasse les données précédemment stockées sur la puissance consommée par la au moins une seconde charge.

11. Filtre actif selon la revendication 1, ledit dispositif électronique compris dans la charge comprenant un système de climatisation, un réfrigérateur et une machine à laver.

12. Filtre actif selon la revendication 1, comprenant en outre :
une unité de mesure (500) conçue pour mesurer le signal électrique de la charge ;
une unité de commande (400) conçue pour acquérir les données sur la puissance consommée par
la charge sur la base du signal électrique mesuré de la charge et conçue pour régler la puissance consommée par la charge sur la base du résultat de la comparaison entre les données acquises et les données sur la puissance prédéfinie consommée par la charge ; et
une unité de communication sans fil (700) conçue pour émettre au moins l'une des données acquises et des données sur la puissance réglée consommée par la charge par l'intermédiaire d'un procédé de communication sans fil.
